# EUROPÄISCHE PATENTSCHRIFT

(11) **EP 2 758 228 B1**
(45) Veröffentlichungstag und Bekanntmachung des Hinweises auf die Patenterteilung: **30.03.2016**
(21) Anmeldenummer: 12762191.0
(22) Anmeldetag: 02.08.2012
(51) Int. Cl.: B29B 11/16, B29C 70/22, D04H 3/04, D04H 3/05, D04H 3/12

(54) **FASERHALBZEUG, FASER-VERBUNDWERKSTOFF UND VERFAHREN ZU DEREN HERSTELLUNG**
SEMI-FINISHED FIBER PRODUCT, FIBER COMPOSITE MATERIAL AND METHOD FOR THE PRODUCTION THEREOF
DEMI-PRODUIT À BASE DE FIBRES, MATÉRIAU COMPOSITE À BASE DE FIBRES ET LEURS PROCÉDÉS DE PRODUCTION

(30) Priorität: 21.09.2011 AT 13612011
(43) Veröffentlichungstag der Anmeldung: 30.07.2014
(73) Patentinhaber: Kapsch-Group Beteiligungs GmbH, 1120 Wien (AT)
(72) Erfinder: SEDLACEK, Norbert, A-3033 Altlengbach (AT)
(74) Vertreter: Weiser, Andreas
(86) Internationale Anmeldenummer: PCT/AT2012/050112
(87) Internationale Veröffentlichungsnummer: WO 2013/040618

(56) Entgegenhaltungen:
- DE-A1- 19 534 627
- DE-B- 1 087 559
- US-A- 3 526 565
- US-A1- 2005 020 168
- US-A1- 2008 047 657

## Beschreibung

Die vorliegende Erfindung betrifft ein Verfahren zum Herstellen eines Faserhalbzeugs für die Einbettung in eine duroplastische Matrix gemäß dem Oberbegriff des Anspruchs 1. Die Erfindung betrifft ferner nach solchen Verfahren hergestellte Faserhalbzeuge gemäß dem Oberbegriff des Anspruchs 19 für die Herstellung von Faser-Verbundwerkstoffen.

Deartige Verfahren und Faserhalbzeuge sind aus der US 2008/0047657 A1 bekannt.

Faser-Verbundwerkstoffe, in welchen Verstärkungsfasern in eine Kunststoff-Matrix eingebettet sind, weisen bei geringem Gewicht hohe Festigkeit auf. Typische Anwendungen liegen unter anderem im Fahrzeug-, Flugzeug- und Bootsbau. So werden bei modernen Segelyachten sowohl Rümpfe als auch Maste, Ruder und sogar Segel aus Faser-Verbundwerkstoffen gefertigt oder damit verstärkt.

Durch gezielte Wahl des eingesetzten Faser- und Matrixmaterials sind die Eigenschaften des Faser-Verbundwerkstoffs wie Steifigkeit, Zugfestigkeit, thermische und chemische Stabilität etc. genau festlegbar. So weisen z.B. Kohlenstoff-Fasern besonders hohe Zugfestigkeit auf und Basaltfasern sind besonders temperaturfest. Eine duroplastische Matrix härtet dauerhaft aus, wogegen eine thermoplastische Matrix bei höheren Temperaturen und eine elastomere Matrix dauerhaft elastisch verformbar ist. Gerade duroplastische Kunststoff-Matrizen werden aufgrund ihrer ausgezeichneten Stabilität gegenüber Temperaturerhöhung, Bestrahlung und chemischer Belastung, beispielsweise durch Meerwasser, für anspruchsvolle Anwendungen im Bootsbau eingesetzt.

Aufgrund ihrer äußerst geringen Durchmesser werden Verstärkungsfasern meist zu Faserbündeln zusammengefasst, welche weiter zu flächenhaften Halbzeugen verarbeitet werden, wie Gelegen, Geweben, Matten oder Vliesen. Für besonders hohe Zugfestigkeit in einer Vorzugsrichtung werden Gelege aus parallelen Faserbündeln verwendet, auch als "unidirektionale Gelege" bzw. UD-Gelege bekannt. Um ein UD-Gelege in der weiteren Verarbeitung hantieren zu können, ist es erforderlich, die Faserbündel in ihrer Lage zueinander zumindest geringfügig zu fixieren. Dazu sind verschiedene Lösungen bekannt. Eine erste Variante ist eine vollständige Beschichtung des UD-Geleges mit einer thermoplastischen Matrix, welche für die spätere Verarbeitung wiederaufschmelzbar ist. Aufgrund der geringen Festigkeit thermoplastischer Materialien ist diese Lösung für hochfesten Boots- und Flugzeugbau nicht geeignet.

Aus der WO 02/45932, der EP 0 193 478 und der US 5 184 387 ist bekannt, UD-Gelege durch Vernähen, Steppen, Verfilzen oder Vernadeln zu fixieren. Nachteilig an diesen Verfahren ist, dass durch Nadeleinstiche viele der Fasern geschädigt bzw. gebrochen werden, an den Durchstichstellen durch das Gelege Fasern bleibend verdrängt werden und Fäden aus Fremdmaterial in das Gelege eingebracht werden. Aus der DE 10 2008 061 314 ist bekannt, ein UD-Gelege durch Pressen so stark zu verfestigen, dass die parallelen Fasern aneinander haften. Ähnlich dem Verfilzen wird eine solche Fixierung durch Brechen einzelner Fasern erzielt. All dies führt zu einer Schwächung des Geleges und in der Folge zu geringerer Festigkeit bzw. Widerstandsfähigkeit des Faser-Verbundstoffs.

Alternativ können UD-Gelege auch durch Klebemittel, z.B. parallel im Gelege verlegte Klebebänder (EP 1 473 132) oder klebende Gewebe- oder Vliesauflagen (EP 1 927 464, EP 1 705 277, EP 1 473 132, EP 2 058 101, WO 99/21697), fixiert werden. Auch ein Auftropfen bzw. Aufsprühen von Klebstoffteilen ist bekannt (WO 00/48821, US 6 585 842). Gemäß der DE 195 34 627 A1 wird eine Fasermatte auf ein UD-Gelege geklebt. Als Klebstoff wird ein Flüssigkleber oder Klebeharz verwendet, mit dem das Fixier-Fadengitter getränkt ist. Die US 2005/0020168 A1 beschreibt das Zusammenkleben von Faserlagen mithilfe eines klebenden Netzes. Die US 3,526,565 offenbart ein Einweben eines UD-Geleges in ein Gewebe von mit Schmelzkleber umhüllten Fäden, worauf der Schmelzkleber aufgeschmolzen wird und als Klebeschicht die Fasern des UD-Geleges fixiert. Nach der DE 1 087 559 werden herkömmliche Textilfäden parallel gespannt, mit Leim getränkt, mit Querfäden bespannt und der Leim hinterher getrocknet. Die US 2003/0180514 und die US 4 460 633 lehren das Fixieren von Fasern eines unidirektionalen Geleges durch quer aufgelegte, mit thermoplastischem Material beschichtete bzw. getränkte Fäden, welche durch Erhitzen mit dem Gelege verbunden werden. Nachteilig ist an diesen Verfahren, dass der eingebrachte Klebstoff bereits viele Fasern zumindest über Teillängen benetzen muss, um sie zu fixieren, und so deren spätere Einbindung in die Matrix des Faser-Verbundstoffs behindert und dessen Festigkeit herabsetzt. Auch bleiben Klebstoff und gegebenenfalls Bänder und Auflagen als Fremdstoffe im Faser-Verbundwerkstoff erhalten und verschlechtern dessen thermische oder chemische Resistenz. Engmaschige Gewebe- oder Vliesauflagen behindern außerdem eine vollständige Durchdringung des Geleges mit der Matrix des Faser-Verbundwerkstoffs.

Bei der eingangsgenannten US 2008/0047657 A1 wird das UD-Gelege mit von duroplastischem Harz imprägnierten Faserabschnitten verstärkt, u.zw. mit abgelängten Faserabschnitten.

Die Erfindung setzt sich zum Ziel, ein Verfahren zum Herstellen eines Faserhalbzeugs hoher Zugfestigkeit zu schaffen, das flexibel und einfach handhabbar ist und den Aufbau eines hochfesten duroplastischen Faser-Verbundwerkstoffes ermöglicht.

Dieses Ziel wird gemäß einem ersten Aspekt der Erfindung mit einem Verfahren der einleitend genannten Art erreicht, das sich dadurch auszeichnet, dass die Faserbündel der zweiten Lage aus zumindest einem fortlaufenden Strang von Endlosfasern gelegt werden. So sind sie vor und während des Auflegens einfach handhabbar und können vorab als gesamter Strang in einem oder während des Verlegens kontinuierlich mit duroplastischer Matrix benetzt werden.

Bei dem Verfahren der Erfindung werden keinerlei Fremdmaterialien, wie Klebstoffe oder Fäden, in das Faserhalbzeug eingebracht. Auch werden die Fasern nicht durch Pressen oder Nadelstiche gebrochen bzw. geschädigt oder an den Durchstichstellen verdrängt. Beim späteren Verlegen des Faserhalbzeugs kann es aufgrund der Beabstandung der Faserbündel der zweiten Lage voneinander von beiden Seiten problemlos von der Matrix durchdrungen werden. Da die Faserbündel der zweiten Lage in stumpfen und spitzen Winkeln gelegt sind, verwölbt oder verwirft sich das Faserhalbzeug auch nicht bei schrägen oder diagonalen Zugbelastungen, wie sie beim Verlegen häufig auftreten, bleibt aber ausgezeichnet flexibel. Das verwölbungsfeste Faserhalbzeug der Erfindung ist damit sicherer und besser zu hantieren als herkömmliche UD-Gelege und führt gleichzeitig zu einem duroplastischen Faser-Verbundwerkstoff erhöhter Festigkeit.

Besonders vorteilhaft ist es, wenn die Faserbündel der zweiten Lage in in der genannten Richtung gesehen aufeinanderfolgenden Bereichen abwechselnd stumpfe und spitze Winkel zu der genannten Richtung einnehmen. Dies gibt dem Faserhalbzeug entlang seiner Legerichtung gleichmäßige Eigenschaften in Bezug auf Flexibilität, Festigkeit und Zugbelastbarkeit. Die aufeinanderfolgend abwechselnde Orientierung der Faserbündel ermöglicht auch ein späteres Ablängen des Faserhalbzeugs an beliebigen Stellen unter Beibehaltung der Fixierungswirkung der zweiten Lage für die erste Lage.

Eine solche Aufeinanderfolge wird gemäß einer vorteilhaften Ausgestaltung der Erfindung dadurch erreicht, dass die Faserbündel der zweiten Lage in Zickzack- oder Wellenform gelegt werden. So kann die zweite Lage rasch aufgelegt werden, besonders wenn deren Faserbündel voneinander weit beabstandet sein sollen.

Einige Faserbündel der zweiten Lage können auch einander kreuzend gelegt werden, wodurch zusätzliche Festigkeit erzielt wird.

Um die Festigkeit des Faser-Verbundwerkstoffs gegenüber Querkräften erhöhen zu können und dabei seine Flexibilität beizubehalten, ist es günstig, wenn in der zweiten Lage neben benetzten auch matrixfreie Faserbündel aufgelegt werden.

Besonders vorteilhaft ist es, wenn beim Auflegen der zweiten Lage Faserbündel in einem ersten Arbeitsgang im genannten stumpfen Winkel und in einem zweiten Arbeitsgang im genannten spitzen Winkel aufgelegt werden. So sind die Faserbündel der zweiten Lage rasch verlegbar.

Gemäß einer weiteren vorteilhaften Ausgestaltung der Erfindung werden die Faserbündel der zweiten Lage die erste Lage seitlich überragend aufgelegt. So bleiben spitze und stumpfe Winkel auch beim Auflegen eines fortlaufenden Strangs aus Endlosfasern als zweite Lage bis zu den seitlichen Rändern der ersten Lage annähernd unverändert und das Fixieren der ersten Lage ist auch ohne übermäßige Präzision beim Verlegen der zweiten Lage sichergestellt, was das Verfahren beschleunigt.

Es ist dabei besonders günstig, wenn jene Abschnitte der Faserbündel der zweiten Lage anschließend abgetrennt werden, welche die erste Lage seitlich überragen. Schlaufen am Rand des Faserhalbzeugs, welche beim Hantieren störend wirken können, werden damit vermieden und dessen Breite fixiert.

Optional kann das Verfahren um den zusätzlichen Schritt des Auflegens zumindest einer weiteren ersten und/oder weiteren zweiten Lage auf die genannte zweite Lage ergänzt werden. Das Verfahren ist somit skalierbar und das hergestellte Faserhalbzeug kann in seiner Festigkeit an die Bedürfnisse der späteren Anwendung angepasst werden. Eine weitere erste Lage kann dabei gegenüber der ersten Lage einen beliebigen Winkel einnehmen; bevorzugt wird sie jedoch etwa parallel zur ersten Lage gelegt.

Das Verfahren der Erfindung ist von seiner Auslegung unabhängig von den verwendeten Fasern. So können Naturfasern wie Holz-, Flachs-, Hanf- oder Sisalfasern, organische Fasern wie Aramid-, Kohlenstoff-, Polyester-, Polyethylen- oder Nylonfasern, oder anorganische Fasern wie Keramik-, Glas-, Bor- oder Kieselsäurefasern eingesetzt werden. Besonders bevorzugt ist jedoch, wenn als Fasern der ersten Lage Basaltfasern verwendet werden. Basaltfasern sind besonders temperaturstabil und chemisch resistent; sie sind dazu kostengünstig und kaum hydrophil; durch ihre Säureresistenz und geringe Vibrationsneigung eignen sie sich besonders für den Einsatz im Bootsbau.

Besonders günstig ist es, wenn für die erste und die zweite Lage Bündel von Fasern aus gleichem Material verwendet werden. Die Verwendung gleichen Materials vereinheitlicht das Faserhalbzeug und seine Widerstandsfähigkeit. Auch Produktionsplanung und Lagerhaltung werden vereinfacht, insbesondere wenn die Faserbündel der ersten und der zweiten Lage jeweils über die gleiche Anzahl von Fasern verfügen und so von derselben Rolle gelegt werden können.

Auch die Auswahl des Matrixmaterials ist nicht auf einzelne Duroplaste begrenzt. Es kommen alle Ein-, Zwei- und Mehrkomponenten-Duroplaste in Frage, u.a. Aminoplaste, Phenoplaste, vernetzte Polyacrylate, Polyurethane, Vinylesterharz oder Polyesterharz. Besonders bevorzugt wird als duroplastische Matrix Epoxidharz verwendet. Es ist besonders fest und chemisch beständig; auch kann seine Aushärtungszeit durch Verwendung geeigneter Härterkomponenten in weiten Bereichen vordefiniert und gegebenenfalls durch Temperaturerhöhung beschleunigt werden. Epoxidharze können, ebenso wie Acrylate und Polyurethane, auch aus Biopolymeren auf Basis nachwachsender Rohstoffe hergestellt werden; sie sind nachhaltig.

Bevorzugt werden die Fasern der ersten Lage auf eine erste Folie gelegt. Dies vereinfacht die Handhabung des Faserhalbzeugs während des Herstellens und schützt Werkzeuge und Maschinen vor Verunreinigung. Optional kann die zweite - bzw. die oberste der weiteren Lagen, sofern vorhanden - mit einer zweiten Folie abgedeckt werden, wodurch ein zusätzlicher Schutz des Halbzeugs und der Umgebung, insbesondere bei nicht vollständig ausgehärteter Matrix, erreicht werden kann.

Günstig ist es, wenn das Faserhalbzeug unter Mitrollen zumindest einer der genannten Folien aufgerollt wird. So können Halbzeuge größerer Länge einfach gelagert und manipuliert werden. Die Gefahr des Verhakens oder Anhaftens des Faserhalbzeugs wird durch die Folie reduziert.

Besonders vorteilhaft ist es, wenn alle Lagen zusätzlich miteinander verpresst werden. Dies begünstigt die Gleichmäßigkeit der Dicke des Faserhalbzeugs und der Verteilung der Fasern darin.

Vorzugsweise wird das Verfahren ergänzt durch den weiteren Schritt des zumindest teilweisen Aushärtens der duroplastischen Matrix. So wird die Wirkung der Fixierung der ersten Lage durch die zweite Lage erhöht und die Gefahr des Anhaftens des Faserhalbzeugs während des weiteren Hantierens bzw. Verarbeitens reduziert.

In einem zweiten Aspekt schafft die Erfindung ein Verfahren zum Herstellen eines Faser-Verbundwerkstoffs, umfassend:
ein Verfahren der geschilderten Art zur Herstellung eines Faserhalbzeugs,
das Einbetten des Faserhalbzeugs in die genannte duroplastische Matrix, und
das Aushärten der duroplastischen Matrix.

Der Faser-Verbundwerkstoff der Erfindung ist frei von jeglichem Fremdmaterial und damit verbundenen Schwächungen und Störungen, sowohl in Bezug auf seine Festigkeitseigenschaften als auch thermische und chemische Resistenz.
In einem dritten Aspekt schafft die Erfindung ein Faserhalbzeug für die Einbettung in eine duroplastische Matrix mit den Merkmalen des Anspruchs 19.

Bezüglich weiterer Merkmale, Ausführungsformen und Vorteile des Faserhalbzeugs der Erfindung wird auf die vorangegangenen Ausführungen zu den erfindungsgemäßen Verfahren verwiesen.

Die Erfindung wird nachfolgend anhand von in den beigeschlossenen Zeichnungen dargestellten Ausführungsbeispielen näher erläutert. In den Zeichnungen zeigen:
Fig. 1 einen Verlegetisch für die Ausführung des erfindungsgemäßen Verfahrens in einer Perspektivansicht von oben;
Fig. 2 eine erste Ausführungsform eines erfindungsgemäßen Faserhalbzeugs in einer schematischen Draufsicht;
Fig. 3 eine Ausführungsform eines erfindungsgemäßen Faser-Verbundwerkstoffs in einem schematischen Querschnitt;
Fig. 4 eine zweite Ausführungsform eines erfindungsgemäßen Faserhalbzeugs im gepressten Zustand in einem schematischen Querschnitt;
Fig. 5 eine dritte Ausführungsform eines erfindungsgemäßen Faserhalbzeugs in einem schematischen Querschnitt;
Fig. 6 eine Anlage zum Herstellen eines Faserhalbzeugs gemäß der Erfindung in einem Endlosverfahren in einer schematischen Perspektivansicht von oben; und
die Fig. 7 und 8 weitere Ausführungsformen des Faserhalbzeugs der Erfindung jeweils in einer schematischen Draufsicht.

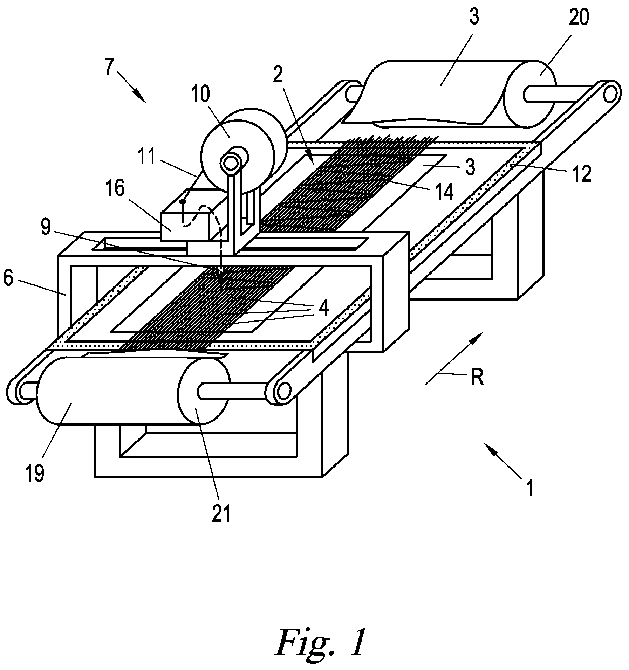

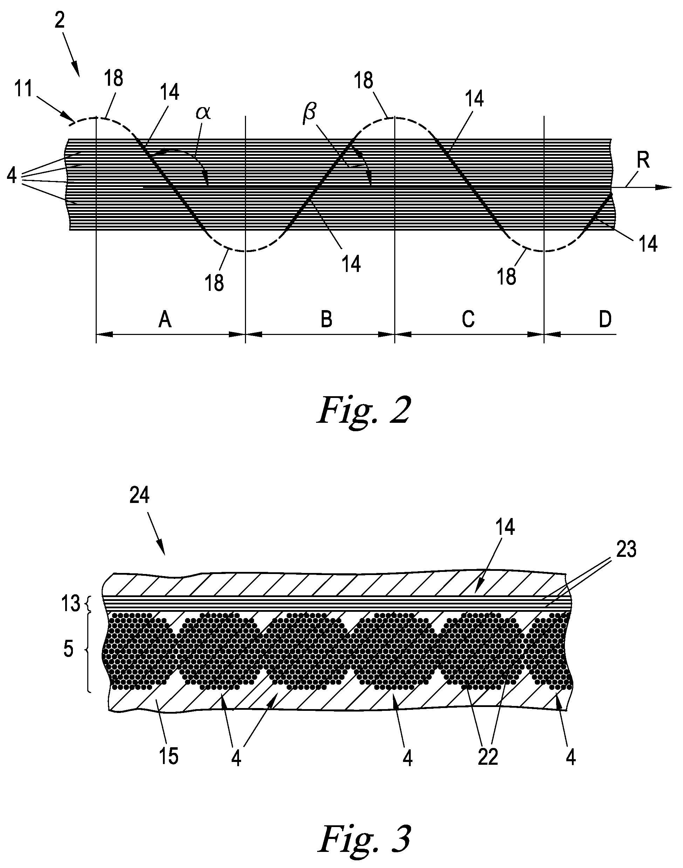

Unter Bezugnahme auf die Fig. 1 bis 3 wird auf einem Verlegetisch 1 ein Faserhalbzeug 2 hergestellt. In einem ersten Schritt werden auf eine erste Folie 3 zueinander parallele Faserbündel 4 in einer Richtung R, d.h. unidirektional ("UD"), als eine erste Lage 5 (Fig. 3) gelegt. Die Faserbündel 4 sind noch mit keinerlei Komponenten der späteren Kunststoffmatrix, in die das Faserhalbzeug 2 eingebettet wird, versehen, d.h. sie sind "matrixfrei".

Zum Verlegen der Faserbündel 4 verfährt ein Schlitten 6 in der Richtung R über dem Verlegetisch 1. Auf dem Schlitten 6 ist ein Verlegekopf 7 quer zur Richtung R beweglich gelagert. Eine Verlegespitze 9 am Verlegekopf 7 zieht die Faserbündel 4 von einer Vorratsrolle 10 als fortlaufender Strang 11 ab und legt sie auf dem Verlegetisch 1 bzw. der Folie 3 ab. Jedes Faserbündel 4 wird dabei einzeln an seinen Enden an einem Klebeband 12 fixiert, welches um den Verlegetisch 1 verläuft. Anstelle eines Klebebandes 12 könnten auch Klemmleisten am Verlegetisch 1 vorgesehen werden. Statt durch den Verlegekopf 7 können die Faserbündel 4 der ersten Lage 5 auch per Hand aufgelegt werden.

Nach dem Legen der ersten Lage 5 wird diese durch Auflegen einer zweiten Lage 13 von "matrixbehafteten" Faserbündeln 14 fixiert. Dazu werden die Faserbündel 14 der zweiten Lage 13 zunächst mit zumindest einer Komponente jener duroplastischen Matrix 15 benetzt, in welche das Faserhalbzeug 2 eingebettet werden soll und welche weiter unten noch näher erörtert wird. Das Benetzen der Faserbündel 14 der zweiten Lage 13 kann per Hand oder in einer Benetzungseinrichtung 16 des Verlegekopfes 7 erfolgen. Die Benetzungseinrichtung 16 kann z.B. als Tauchbad aufgebaut sein oder die Faserbündel 14 mit Matrix 15 besprühen oder bestreichen. Die Benetzungseinrichtung 16 kann entfallen, wenn die Faserbündel 14 auf der Vorratsrolle 10 bereits benetzt vorliegen.

Über die Verlegespitze 9 werden die matrixbenetzten bzw. -behafteten Faserbündel 14 als Strang 11 auf der ersten Lage 5 abgelegt. Wie aus Fig. 2 ersichtlich, sind die Faserbündel 14 durch das wellenförmige Ablegen in Richtung R gesehen jeweils voneinander beabstandet und verlaufen jeweils abwechselnd in einem stumpfen Winkel α und einem spitzen Winkel β zur Richtung R, d.h. sie nehmen in in der Richtung R aufeinanderfolgenden Bereichen A, B, C, D usw. jeweils abwechselnd stumpfe und spitze Winkel α, β zur Richtung R ein. Weitere Faserbündel 14 der zweiten Lage 13 können in weiteren Arbeitsgängen vom Verlegekopf 7 oder von weiteren (nicht dargestellten) Verlegeköpfen aufgelegt werden, wie später noch ausführlicher erläutert.

Der Strang 11 von Faserbündeln 14 überragt in der Ausführungsform von Fig. 2 nach dem Auflegen die erste Lage 5 seitlich in Abschnitten 18. Durch anschließendes Abtrennen der Abschnitte 18 entsteht ein Faserhalbzeug 2 gleichbleibender Breite. Alternativ kann ein solches Faserhalbzeug 2 auch durch Auflegen bereits vorabgelängter matrixbehafteter Faserbündel 14 hergestellt werden. Das Faserhalbzeug 2 kann anschließend mit einer zweiten Folie 19 für Transport und Lagerung abgedeckt werden. Folienrollen 20 und 21 am Verlegetisch 1 dienen der Entnahme der ersten und der zweiten Folie 3, 19.

Wie aus Fig. 3 ersichtlich, sind die Faserbündel 4, 14 der Lagen 5, 13 jeweils aus einer Vielzahl dünner Fasern 22, 23 aufgebaut. Die Fasern 22 der ersten Lage 5 könnten grundsätzlich auch einzeln gelegt bzw. ausgebreitet werden; bevorzugt werden sie jedoch wie die Fasern 23 der zweiten Lage 13 als Faserbündel verarbeitet. Die Faserbündel 4, 14 sind bevorzugt unverdrillt oder nur gering verdrillt (sog. "Rovings").

Bevorzugt haben die Faserbündel 14 der zweiten Lage 13 eine wesentlich geringere Anzahl von Fasern 22 als die Faserbündel 4 der ersten Lage 5, wie in Fig. 3 angedeutet, weil sie nur der Fixierung des tragenden UD-Geleges der ersten Lage 5 dienen. Alternativ könnten die Faserbündel 4, 14 beider Lagen 5, 13 auch über die gleiche Anzahl an Fasern 22, 23 verfügen, so dass sie z.B. auch demselben Strang 11 der Vorratsrolle 10 entnommen werden könnten.

Die Fasern 22, 23 sind bevorzugt Basaltfasern. Alternativ können auch Naturfasern wie Holz-, Flachs-, Hanf- oder Sisalfasern, organische Fasern wie Aramid-, Kohlenstoff-, Polyester-, Polyethylen- oder Nylonfasern, oder anorganische Fasern wie Keramik-, Glas-, Bor- oder Kieselsäurefasern eingesetzt werden, wobei die Fasern 22 der ersten Lage 5 und die Fasern 23 der zweiten Lage 13 auch aus voneinander verschiedenen Materialien sein können.

Fig. 3 zeigt den Aufbau eines Faser-Verbundwerkstoffes 24 auf Grundlage des Faserhalbzeugs 2. Dazu wird das Faserhalbzeug 2 vollständig in jene duroplastische Matrix 15 eingebettet, mit der - oder mit zumindest einer deren Komponenten, im Falle einer Mehrkomponenten-Matrix - die zweite Lage 13 benetzt worden ist. Im Faser-Verbundwerkstoff 24 umgibt und durchdringt die Matrix 15 nun alle Lagen 5, 13 des Faserhalbzeugs 2. Die ursprünglich der Fixierung der ersten Lage 5 dienende Benetzung der zweiten Lage 13 mit Matrix 15 geht nun in der gesamten Matrix 15 des Faser-Verbundwerkstoffs 24 ununterscheidbar bzw. materialgleich auf.

Die duroplastische Matrix 15 ist bevorzugt ein selbsthärtendes Epoxidharz. Es können jedoch auch andere duroplastische Materialien als Matrix 15 dienen, wie Aminoplaste, Phenoplaste, vernetzte Polyacrylate, Polyurethane, Vinylesterharze oder Polyesterharze.

Das Aushärten der Matrix 15 im Faser-Verbundwerkstoff 24 kann auf jede in der Technik bekannte Art und Weise erfolgen, beispielsweise durch bloßen Zeitablauf oder optional eingeleitet bzw. beschleunigt durch Bestrahlen z.B. mit UV-Licht oder Elektronenstrahlen, durch Erwärmen oder - wenn es sich um eine Zwei- oder Mehrkomponenten-Matrix handelt - durch Aufbringen einer Härterkomponente. Jener Teil der Matrix 15, mit welchem die Faserbündel 14 beim Aufbringen der zweiten Lage 13 benetzt wurden, kann schon bei der Fertigstellung des Faserhalbzeugs 2 auf die genannten Arten ganz oder teilweise ausgehärtet worden sein; in letzterem Falle erfolgt seine vollständige Aushärtung dann nach dem Einbetten des Faserhalbzeugs 2 in die Matrix 15 gemeinsam mit dem Aushärten des gesamtem Faser-Verbundwerkstoffes 24.

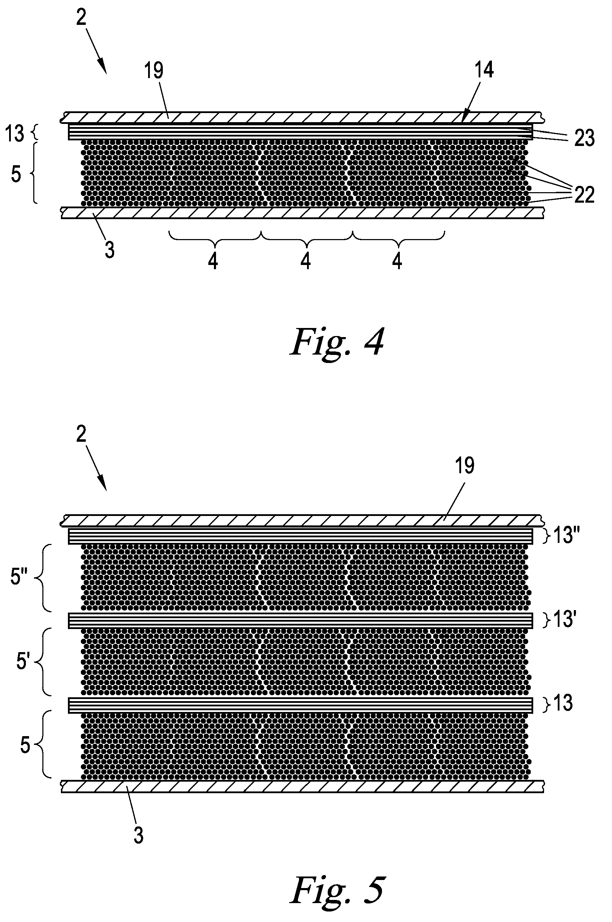

Fig. 4 zeigt das optionale Verpressen der Faserbündel 4, 14 der ersten und der zweiten Lage 5, 13, gegebenenfalls auch gemeinsam mit der ersten und der zweiten Folie 3, 19. Die Fasern 22, 23 der beiden Lagen 5, 13 liegen dann gleichmäßiger und dichter als im Faserhalbzeug 2 der Fig. 1 bis 3, sind aber nicht gebrochen oder beschädigt wie bei herkömmlichen Verfahren.

Fig. 5 zeigt eine weitere Ausführungsform eines Faserhalbzeugs 2, das über der zweiten Lage 13 weitere erste und zweite Lagen 5', 13', 5", 13" usw. in beliebiger Anzahl und bevorzugt einander abwechselnd aufweist. Die Faserbündel der verschiedenen Lagen 5, 5', 5", 13, 13', 13" können auch aus verschiedenen Materialien bestehen. Das Faserhalbzeug 2 von Fig. 5 kann auch wie in Fig. 3 unverpresst sein.

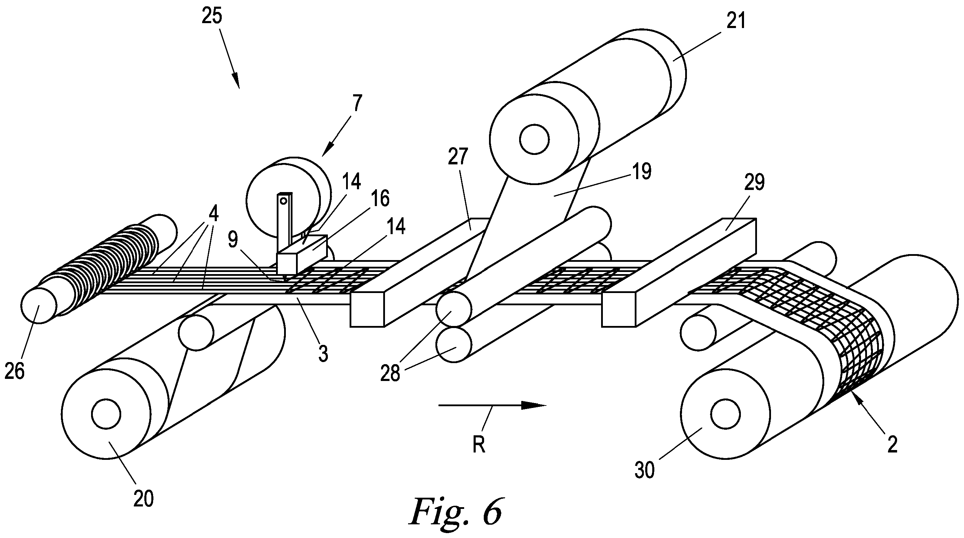

Fig. 6 zeigt eine zu Fig. 1 alternative Art der Herstellung des Faserhalbzeugs 2 nach einem Endlos-Verfahren in einer Anlage 25. Von einer Rolle 26 wird eine Vielzahl paralleler Faserbündel 4 gleichzeitig abgerollt und bildet so wieder die erste Lage 5. Anstelle der Rolle 26 könnten die Faserbündel 4 z.B. auch einer Vielzahl einzelner Vorratsrollen - ähnlich der Vorratsrolle 10 von Fig. 1 - gleichzeitig entnommen und beispielsweise von kammförmigen Führungen oder Führungsrollen zur ersten Lage 5 aufgefächert werden.

In Richtung R in die Anlage 25 eingezogen wird die erste Lage 5 zunächst mit der ersten Folie 3 von der Folienrolle 20 unterlegt. Der Verlegekopf 7 legt mit seiner Verlegespitze 9 anschließend die Faserbündel 14 der zweiten Lage 13 auf die erste Lage 5 auf. Die Faserbündel 14 werden vor dem Auflegen in der Benetzungseinrichtung 16 mit Matrix 15 oder einer Komponente derselben benetzt.

Der Verlegekopf 7 ist zumindest quer zur Richtung R verfahrbar und legt so die Faserbündel 14 in Wellenform auf die vorbeiziehende erste Lage 5. Um ein teilweises oder vollständiges Aushärten der matrixbehafteten Faserbündel 14 einzuleiten oder zu beschleunigen, ist eine erste Prozesseinrichtung 27 nachgeschaltet, welche die Faserbündel 14 erwärmt, bestrahlt oder Härterkomponenten aufträgt. Die Faserbündel 4, 14 der ersten und der zweiten Lage 5, 13 werden anschließend mittels zweier Pressrollen 28 verpresst, wobei in diesem Schritt gleichzeitig die zweite Folie 19 auf die zweite Lage 13 aufgebracht werden kann. Noch einmal wird das Aushärten der Matrix 15 durch eine zweite Prozesseinrichtung 29 unterstützt. Das fertige Faserhalbzeug 2 wird anschließend mitsamt der ersten und der zweiten Folie 3, 19 auf eine Rolle 30 aufgewickelt. Es versteht sich, dass die Anlage 25 in Fig. 6 stark schematisiert dargestellt ist; sie kann über komplexere Ab- und Aufrollmechanismen und weitere Zwischenrollen für die Faserbündel 4, 14 verfügen, ebenso über weitere Verlegeköpfe 7 und Einrichtungen zum Abtrennen seitlicher Abschnitte 18 am Faserhalbzeug 2.

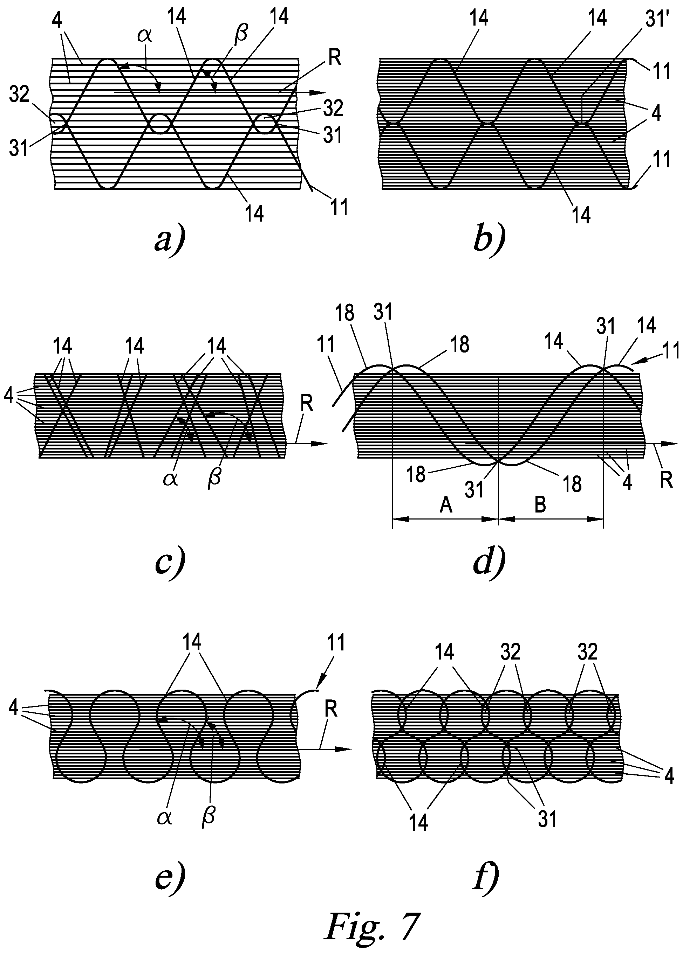

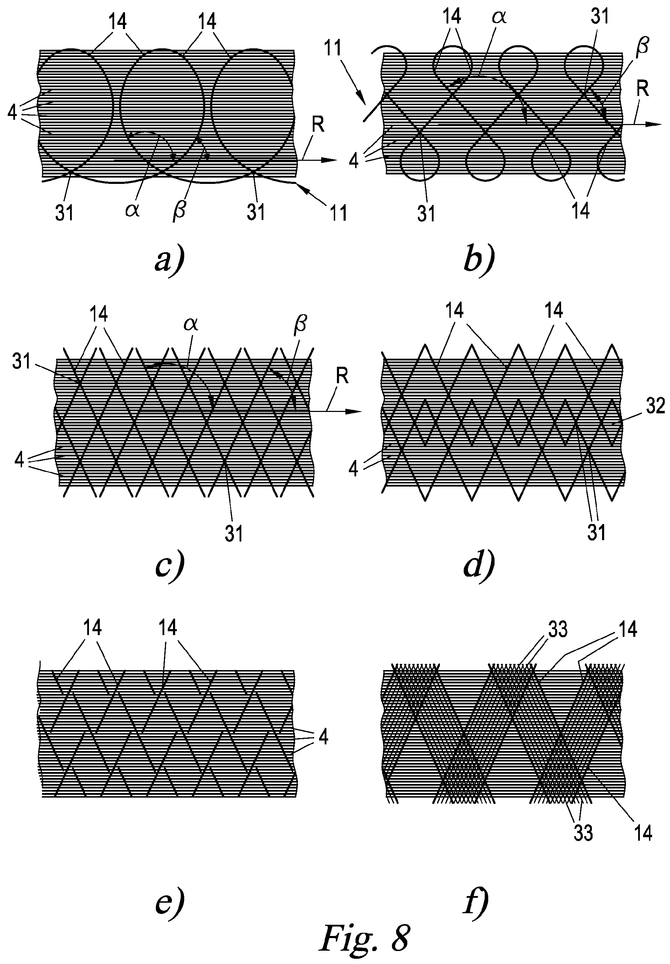

Die Fig. 7 und 8 zeigen weitere mögliche Ausführungsformen des Faserhalbzeugs 2. Gemäß Fig. 7a können die Faserbündel 4 der ersten Lage 5 voneinander beabstandet gelegt werden, auch mit variierenden gegenseitigen Parallelabständen. In Fig. 7a sind ferner zwei Stränge 11 von matrixbenetzten Faserbündeln 14 als zweite Lage 13 in Wellenform gelegt, wobei die Stränge 11 einander in Kreuzungspunkten 31 kreuzen und mit Überlappungen 32 überlappen können. Die Kreuzungspunkte 31 bewirken eine zusätzliche Verstärkung des Faserhalbzeugs 2. Die Faserbündel 14 der zweiten Lage 13 gehen dabei nicht über die Breite der ersten Lage 5 hinaus. Eine solche zweite Lage 13 kann wie oben beschrieben von einem Verlegekopf 7 in mehreren Arbeitsgängen oder von mehreren Verlegeköpfen 7 gleichzeitig hergestellt werden.

Fig. 7b zeigt ein Faserhalbzeug 2 mit zwei wellenförmigen Strängen 11 von Faserbündeln 14 der zweiten Lage 13, welche weder Überlappungen 32 aufweisen noch die erste Lage 5 seitlich überragen, sich jedoch an Berührungspunkten 31' berühren.

Die zweite Lage 13 von Fig. 7c ist aus einzeln abgelängten Faserbündeln 14 gelegt, welche in Zick-Zack-Form aufgelegt werden und einander in Kreuzungspunkten 31 kreuzen. Einige dieser Faserbündel 14 sind dabei doppelt aufgelegt, was das Faserhalbzeug 2 zusätzlich verstärkt. Die stumpfen und spitzen Winkel α, β können auch variieren und z.B. auch zueinander nichtkomplementär sein. Die Ausführungsform von Fig. 7c kann auch durch Abtrennen der Abschnitte 18 fortlaufender Stränge 11 von Faserbündeln 14 hergestellt werden.

Fig. 7d zeigt zwei in Wellenform aufgelegte Stränge 11 von Faserbündeln 14, welche gegeneinander in Richtung R versetzt sind. Die Kreuzungspunkte 31 der beiden Stränge 11 können dabei auch auf den seitlich vorragenden Abschnitten 18 zu liegen kommen; nach Abtrennen der Abschnitte 18 entsteht ein Faserhalbzeug 2 ohne Kreuzungspunkte 31, jedoch mit etwa doppelt so vielen Faserbündeln 14 wie das Faserhalbzeug 2 von Fig. 2.

Fig. 7e zeigt ein Faserhalbzeug 2 mit einem schlingenförmig aufgelegten Strang 11 von Faserbündeln 14. Wieder bilden die Faserbündel 14 der zweiten Lage 13 abwechselnd überwiegend stumpfe und spitze Winkel α, β zur UD-Richtung R, wenn auch entlang eines Faserbündels 14 gesehen variierend. Ganz ähnlich dazu zeigt Fig. 7f einen schlingenförmig gelegten Strang 11 aus Faserbündel 14 mit Kreuzungspunkten 31 und Überlappungen 32.

Bei dem Faserhalbzeug 2 von Fig. 8a ist ein Strang 11 von Faserbündeln 14 schleifenförmig auf die UD-Lage 5 gelegt. Auch diese Ausführungsform des Faserhalbzeugs 2 weist in aufeinanderfolgenden Bereichen abwechselnd überwiegend stumpfe und spitze Winkel α, β zur Richtung R auf, wenn auch entlang eines Faserbündels 14 gesehen stark variierend.

Wesentlich mehr Kreuzungspunkte 31 zeigen in Fig. 8b die im Strang 11 doppelschleifenförmig verlegten Faserbündel 14. Werden in einer solchen Anordnung mehrere Stränge 11 in aufeinander folgenden Arbeitsgängen gelegt und die seitlich überragenden Abschnitte 18 abgetrennt, so ergibt sich z.B. eine Ausführungsform wie in Fig. 8c. Diese kann auch aus einzeln abgelängten Faserbündeln 14 oder mehrfachen Strängen 11 gemäß Fig. 7a oder 7d hergestellt werden.

Die Faserbündel 14 der zweiten Lage 13 können jeweils auch in einem ersten Arbeitsgang - gleichsam als eine erste Schicht der Lage 13 - in stumpfen Winkeln α und in einem zweiten Arbeitsgang - gleichsam als eine zweite Schicht der Lage 13 - in spitzen Winkeln β zur Richtung R gelegt werden.

Fig. 8d zeigt abgelängte Faserbündel 14 in Zick-Zack-Form mit Kreuzungspunkten 31 und Überlappungen 32. Wie in Fig. 8e gezeigt, können abgelängte Faserbündel 14 auch ähnlich wie in Fig. 8c, jedoch ohne Kreuzungspunkte 31 gelegt werden.

Die zweite Lage 13 von Fig. 8f verfügt neben matrixbenetzten Faserbündeln 14 auch über matrixfreie Faserbündel 33, welche parallel zu den matrixbenetzten Faserbündeln 14 verlegt sind. Matrixfreie Faserbündel 33 können auch in allen anderen Ausführungsvarianten Bestandteil der zweiten Lage 13 sein.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Verfahren zum Herstellen eines Faserhalbzeugs für die Einbettung in eine duroplastische Matrix, umfassend die Schritte
Legen einer ersten Lage (5) aus parallelen, matrixfreien Fasern (22) in einer Richtung (R), und
Fixieren der ersten Lage (5) durch Auflegen von mit zumindest einer Komponente der duroplastischen Matrix (15) benetzten Fasern (23) in voneinander beabstandeten Bündeln (14) in einer zweiten Lage (13),
wobei die Faserbündel (14) der zweiten Lage (13) sowohl in stumpfen als auch in spitzen Winkeln (α, β) zu der genannten Richtung (R) gelegt werden, **dadurch gekennzeichnet,**
**dass** die Faserbündel (14) der zweiten Lage (13) aus zumindest einem fortlaufenden Strang (11) von Endlosfasern (23) gelegt werden.

2. Verfahren nach Anspruch 1, **dadurch gekennzeichnet, dass** die Faserbündel (14) der zweiten Lage (13) in in der genannten Richtung (8) gesehen aufeinanderfolgenden Bereichen (A-D) abwechselnd stumpfe und spitze Winkel (α, β) zu der genannten Richtung (8) einnehmen.

3. Verfahren nach Anspruch 1 oder 2, **dadurch gekennzeichnet, dass** die Faserbündel (14) der zweiten Lage (13) in Zickzack- oder Wellenform gelegt werden.

4. Verfahren nach einem der Ansprüche 1 bis 3, **dadurch gekennzeichnet, dass** einige Faserbündel (14) der zweiten Lage (13) einander kreuzend gelegt werden.

5. Verfahren nach einem der Ansprüche 1 bis 4, **dadurch gekennzeichnet, dass** in der zweiten Lage (13) neben benetzten auch matrixfreie Faserbündel (33) aufgelegt werden.

6. Verfahren nach einem der Ansprüche 1 bis 5, **dadurch gekennzeichnet, dass** beim Auflegen der zweiten Lage (13) Faserbündel (14) in einem ersten Arbeitsgang im genannten stumpfen Winkel (α) und in einem zweiten Arbeitsgang im genannten spitzen Winkel (β) aufgelegt werden.

7. Verfahren nach einem der Ansprüche 1 bis 6, **dadurch gekennzeichnet, dass** die Faserbündel (14) der zweiten Lage (13) die erste Lage (5) seitlich überragend aufgelegt werden.

8. Verfahren nach Anspruch 7, **dadurch gekennzeichnet, dass** die die erste Lage (5) seitlich überragenden Abschnitte (18) der Faserbündel (14) der zweiten Lage (13) abgetrennt werden.

9. Verfahren nach einem der Ansprüche 1 bis 8, **gekennzeichnet durch** den zusätzlichen Schritt des Auflegens zumindest einer weiteren ersten und/oder weiteren zweiten Lage (5', 5", 13', 13"), auf die genannte zweite Lage (13).

10. Verfahren nach einem der Ansprüche 1 bis 9, **dadurch gekennzeichnet, dass** als Fasern (22) der ersten Lage (5) Basaltfasern verwendet werden.

11. Verfahren nach einem der Ansprüche 1 bis 10, **dadurch gekennzeichnet, dass** für die erste und die zweite Lage (5, 13) Bündel (4, 14) von Fasern (22, 23) aus gleichem Material verwendet werden.

12. Verfahren nach einem der Ansprüche 1 bis 11, **dadurch gekennzeichnet, dass** als duroplastische Matrix (15) Epoxidharz verwendet wird.

13. Verfahren nach einem der Ansprüche 1 bis 12, **dadurch gekennzeichnet, dass** die Fasern (22) der ersten Lage (5) auf eine erste Folie (3) gelegt werden.

14. Verfahren nach einem der Ansprüche 1 bis 13, **dadurch gekennzeichnet, dass** die zweite bzw. die oberste der weiteren Lagen (13, 5', 13', 5", 13"), sofern vorhanden, mit einer zweiten Folie (19) abgedeckt wird.

15. Verfahren nach Anspruch 13 oder 14, **dadurch gekennzeichnet, dass** das Faserhalbzeug (2) unter Mitrollen zumindest einer der genannten Folien (3, 19) aufgerollt wird.

16. Verfahren nach einem der Ansprüche 1 bis 15, **dadurch gekennzeichnet, dass** alle Lagen (5, 13, 5', 13', 5", 13") miteinander verpresst werden.

17. Verfahren nach einem der Ansprüche 1 bis 16, **gekennzeichnet durch** den weiteren Schritt des zumindest teilweisen Aushärtens der duroplastischen Matrix (15).

18. Verfahren zum Herstellen eines Faser-Verbundwerkstoffs, umfassend ein Verfahren nach einem der Ansprüche 1 bis 17 und die weiteren Schritte des
Einbettens des Faserhalbzeugs (2) in die genannte duroplastische Matrix (15), und
Aushärtens der duroplastischen Matrix (15).

19. Faserhalbzeug für die Einbettung in eine duroplastische Matrix, umfassend
eine erste Lage (5) aus parallelen, matrixfrei in einer Richtung (R) gelegten Fasern (22), und
eine auf der ersten Lage (5) aufliegende, diese fixierende zweite Lage (13) von mit zumindest einer Komponente der duroplastischen Matrix (15) behafteten Fasern (23) in voneinander beabstandeten Bündeln (14),
wobei die Faserbündel (14) der zweiten Lage (13) sowohl stumpfe als auch spitze Winkel (α, β) zu der genannten Richtung (R) aufweisen, **dadurch gekennzeichnet,**
**dass** die Faserbündel (14) der zweiten Lage (3) aus zumindest einem fortlaufenden Strang (11) von Endlosfasern (23) gebildet sind.

20. Faserhalbzeug nach Anspruch 19, **dadurch gekennzeichnet, dass** die Faserbündel (14) der zweiten Lage (13) in in der genannten Richtung (R) gesehen aufeinanderfolgenden Bereichen (A-D) abwechselnd stumpfe und spitze Winkel (α, β) zu der genannten Richtung (R) aufweisen.

21. Faserhalbzeug nach Anspruch 19 oder 20, **dadurch gekennzeichnet, dass** die Faserbündel (14) der zweiten Lage (13) in Zickzack- oder Wellenform angeordnet sind.

22. Faserhalbzeug nach einem der Ansprüche 19 bis 21, **dadurch gekennzeichnet, dass** einige Faserbündel (14) der zweiten Lage (13) einander kreuzen.

23. Faserhalbzeug nach einem der Ansprüche 19 bis 22, **dadurch gekennzeichnet, dass** die zweite Lage (13) neben matrixbehafteten auch matrixfreie Faserbündel (33) aufweist.

24. Faserhalbzeug nach einem der Ansprüche 19 bis 23, **dadurch gekennzeichnet, dass** die zweite Lage (13) aus zwei Schichten von Faserbündeln (14) aufgebaut ist, in deren einer die Faserbündel (14) im genannten stumpfen Winkel (α) und in deren anderer die Faserbündel (14) im genannten spitzen Winkel (β) liegen.

25. Faserhalbzeug nach einem der Ansprüche 19 bis 24, **dadurch gekennzeichnet, dass** die Faserbündel (14) der zweiten Lage (13) die erste Lage (5) seitlich überragen.

26. Faserhalbzeug nach einem der Ansprüche 19 bis 25, **dadurch gekennzeichnet, dass** zumindest eine weitere erste und/oder weitere zweite Lage (5', 5", 13', 13") auf der genannten zweiten Lage (13) aufliegt.

27. Faserhalbzeug nach einem der Ansprüche 19 bis 26, **dadurch gekennzeichnet, dass** die Fasern (22) der ersten Lage (5) Basaltfasern sind.

28. Faserhalbzeug nach einem der Ansprüche 19 bis 27, **dadurch gekennzeichnet, dass** die erste und die zweite Lage (5, 13) mit Bündeln (4, 14) von Fasern (22, 23) aus gleichem Material gefertigt sind.

29. Faserhalbzeug nach einem der Ansprüche 19 bis 28, **dadurch gekennzeichnet, dass** die duroplastische Matrix (15) Epoxidharz ist.

30. Faserhalbzeug nach einem der Ansprüche 19 bis 29, **dadurch gekennzeichnet, dass** es auf zumindest einer seiner Oberflächen mit einer Folie (3, 19) versehen ist.

31. Faserhalbzeug nach einem der Ansprüche 19 bis 30, **dadurch gekennzeichnet, dass** alle Lagen (5, 5', 5", 13, 13', 13") miteinander verpresst sind.

32. Faserhalbzeug nach einem der Ansprüche 19 bis 31, **dadurch gekennzeichnet, dass** die duroplastische Matrix (15) zumindest teilweise ausgehärtet ist.

## Claims

1. Method for producing a semi-finished fiber product for embedding into a thermosetting matrix, comprising the steps of
laying a first layer (5) of parallel, matrix-free fibers (22) in one direction (R), and
fixating the first layer (5) by laying fibres (23) wetted with at least one component of the thermosetting matrix (15) in mutually spaced bundles (14) onto it in a second layer (13),
wherein the fiber bundles (14) of the second layer (13) can be placed in obtuse as well as in acute angles (α, β) with respect to said direction (R), **characterised in that**
the fiber bundles (14) of the second layer (13) are laid from at least one continuous roving (11) of filaments (23).

2. Method according to claim 1, **characterised in that** the fiber bundles (14) of the second layer (13) alternatingly assume obtuse and acute angles (α, β) with respect to said direction (8) in sequential areas (A - D), seen in said direction (8).

3. Method according to claim 1 or 2, **characterised in that** the fiber bundles (14) of the second layer (13) are laid in a zigzag or wave form.

4. Method according to any one of the claims 1 to 3, **characterised in that** some fiber bundles (14) of the second layer (13) are laid in a mutually intersecting manner.

5. Method according to any one of the claims 1 to 4, **characterised in that** in the second layer (13) also matrix-free fiber bundles (33) are laid besides wetted ones.

6. Method according to any one of the claims 1 to 5, **characterised in that** during laying the second layer (13), fiber bundles (14) are laid in a first work step in said obtuse angle (α) and in a second work step in said acute angle (β).

7. Method according to any one of the claims 1 to 6, **characterised in that** the fiber bundles (14) of the second layer (13) are laid in a manner so as to laterally protrude the first layer (5).

8. Method according to claim 7, **characterised in that** the sections (18) of the fiber bundles (14) of the second layer (13) that protrude the first layer (5) are severed.

9. Method according to any one of the claims 1 to 8, **characterised by** the additional step of laying at least one further first and/or second layer (5', 5", 13', 13") onto said second layer (13).

10. Method according to any one of the claims 1 to 9, **characterised in that** basalt fibers are used as fibers (22) of the first layer (5).

11. Method according to any one of the claims 1 to 10, **characterised in that** bundles (4, 14) of fibers (22, 23) of the same material are used for the first and second layer (5, 13).

12. Method according to any one of the claims 1 to 11, **characterised in that** epoxy resin is used as thermosetting matrix (15).

13. Method according to any one of the claims 1 to 12, **characterised in that** the fibers (22) of the first layer (5) are laid onto a first foil (3).

14. Method according to any one of the claims 1 to 13, **characterised in that** the second and/or the topmost of the further layers (13, 5', 13', 5", 13"), if present, are covered with a second foil.

15. Method according to claim 13 or 14, **characterised in that** the semi-finished fiber product (2) is rolled-up by rolling it together with at least one of said foils (3, 19).

16. Method according to any one of the claims 1 to 15, **characterised in that** all layers (5, 13, 5', 13', 5", 13") are pressed together.

17. Method according to any one of the claims 1 to 16, **characterised by** the further step of at least partially hardening the thermosetting matrix (15).

18. Method for producing a fiber composite material, comprising a method according to any one of the claims 1 to 17 and the further steps of
embedding the semi-finished fiber product (2) into said thermosetting matrix (15), and
hardening the thermosetting matrix (15).

19. Semi-finished fiber product for embedding into a thermosetting matrix, comprising
a first layer (5) of parallel, matrix-free fibers (22) laid in one direction (R), and
a second layer (13) lying on and fixating the first layer (5), the second layer comprising fibers (23) covered with at least one component of the thermosetting matrix (15) in mutually spaced bundles (14),
wherein the fiber bundles (14) of the second layer (13) have obtuse as well as acute angles (α, β) with respect to said direction (R), **characterised in that**
the fiber bundles (14) of the second layer (13) are formed from at least one continuous roving (11) of filaments (23).

20. Semi-finished fiber product according to claim 19, **characterised in that** the fiber bundles (14) of the second layer (13) have alternating obtuse and acute angles with respect to said direction (8) in sequential areas (A - D), seen in said direction (8).

21. Semi-finished fiber product according to claim 19 or 20, **characterised in that** the fiber bundles (14) of the second layer (13) are arranged in a zigzag or wave form.

22. Semi-finished fiber product according to any one of the claims 19 to 21, **characterised in that** some fiber bundles (14) of the second layer (13) are mutually intersecting.

23. Semi-finished fiber product according to any one of the claims 19 to 22, **characterised in that** in the second layer (13) also has fiber bundles (33) free of matrix besides covered ones.

24. Semi-finished fiber product according to any one of the claims 19 to 23, **characterised in that** the second layer (13) is made out of two stratums of fiber bundles (14), in the one stratum of which the fiber bundles (14) lie in said obtuse angle (α) and in the other stratum of which the fiber bundles (14) lie in said acute angle (β).

25. Semi-finished fiber product according to any one of the claims 19 to 24, **characterised in that** the fiber bundles (14) of the second layer (13) laterally protrude the first layer (5).

26. Semi-finished fiber product according to any one of the claims 19 to 25, **characterised in that** at least one further first and/or second layer (5', 5", 13', 13") lies on said second layer (13).

27. Semi-finished fiber product according to any one of the claims 19 to 26, **characterised in that** the fibers (22) of the first layer (5) are basalt fibers.

28. Semi-finished fiber product according to any one of the claims 19 to 27, **characterised in that** the first and second layers (5, 13) are made out of bundles (4, 14) of fibers (22, 23) of the same material.

29. Semi-finished fiber product according to any one of the claims 19 to 28, **characterised in that** the thermosetting matrix (15) is epoxy resin.

30. Semi-finished fiber product according to any one of the claims 19 to 29, **characterised in that** it is provided with a foil (3, 19) on at least one of its surfaces.

31. Semi-finished fiber product according to any one of the claims 19 to 30, **characterised in that** all layers (5, 13, 5', 13', 5", 13") are pressed together.

32. Semi-finished fiber product according to any one of the claims 19 to 31, **characterised in that** the thermosetting matrix (15) is at least partially hardened.

## Revendications

1. Procédé de fabrication d'un demi-produit à base de fibres pour l'encastrement dans une matrice thermodurcissable, comprenant les étapes
de dépose d'une première couche (5) de fibres (22) parallèles exemptes de matrice dans une direction (R), et
de fixation de la première couche (5) par un dépôt de fibres (23), mouillées avec au moins une composante de la matrice thermodurcissable (15), en faisceaux (14) espacés les uns des autres dans une deuxième couche (13),
où les faisceaux de fibres (14) de la deuxième couche (13) sont déposés faisant des angles tout à la fois obtus et aigus (α, β) par rapport à la direction (R) mentionnée, **caractérisé en ce**
**que** les faisceaux de fibres (14) de la deuxième couche (13) sont déposés à partir d'au moins un écheveau continu (11) de fibres sans fin (23).

2. Procédé selon la revendication 1, **caractérisé en ce que** les faisceaux de fibres (14) de la deuxième couche (13) adoptent de manière alternée des angles obtus et aigus (α, β) par rapport à la direction (8) mentionnée dans des domaines (A à D) se succédant, vu dans la direction (8) mentionnée.

3. Procédé selon la revendication 1 ou 2, **caractérisé en ce que** les faisceaux de fibres (14) de la deuxième couche (13) sont déposés sous une forme de zigzags ou d'ondulations.

4. Procédé selon l'une des revendications 1 à 3, **caractérisé en ce que** quelques faisceaux de fibres (14) de la deuxième couche (13) sont déposés en se croisant les uns les autres.

5. Procédé selon l'une des revendications 1 à 4, **caractérisé en ce que**, dans la deuxième couche (13), des faisceaux de fibres exempts de matrice (33) sont également déposés à côté des faisceaux de fibres mouillés.

6. Procédé selon l'une des revendications 1 à 5, **caractérisé en ce que** lors de la dépose de la deuxième couche (13), des faisceaux de fibres (14) sont déposés dans ledit angle obtus (α) dans une première opération et dans ledit angle aigu (β) dans une deuxième opération.

7. Procédé selon l'une des revendications 1 à 6, **caractérisé en ce que** les faisceaux de fibres (14) de la deuxième couche (13) sont déposés en faisant saillie latéralement par rapport à la première couche (5).

8. Procédé selon la revendication 7, **caractérisé en ce que** les parties (18) des faisceaux de fibres (14) de la deuxième couche (13) faisant saillie latéralement par rapport à la première couche (5) sont détachées.

9. Procédé selon l'une des revendications 1 à 8, **caractérisé par** l'étape complémentaire de dépose d'au moins une autre première et/ou d'une autre deuxième couche (5', 5", 13', 13") sur ladite deuxième couche (13).

10. Procédé selon l'une des revendications 1 à 9, **caractérisé en ce que** des fibres de basalte sont employées en tant que fibres (22) de la première couche (5).

11. Procédé selon l'une des revendications 1 à 10, **caractérisé en ce que**, pour les première et deuxième couches (5, 13), des faisceaux (4, 14) de fibres (22, 23) du même matériau sont employés.

12. Procédé selon l'une des revendications 1 à 11, **caractérisé en ce qu'**une résine époxyde est employée en tant que matrice thermodurcissable (15).

13. Procédé selon l'une des revendications 1 à 12, **caractérisé en ce que** les fibres (22) de la première couche (5) sont déposées sur un premier film (3).

14. Procédé selon l'une des revendications 1 à 13, **caractérisé en ce que** la deuxième, respectivement la couche supérieure, des autres couches (13, 5', 13', 5", 13"), dans la mesure où elle est présente, est recouverte avec un deuxième film (19).

15. Procédé selon la revendication 13 ou 14, **caractérisé en ce que** le demi-produit à base de fibres (2) est enroulé moyennant l'enroulement conjoint d'au moins l'un desdits films (3, 19).

16. Procédé selon l'une des revendications 1 à 15, **caractérisé en ce que** toutes les couches (5, 13, 5', 13', 5", 13") sont comprimées ensemble.

17. Procédé selon l'une des revendications 1 à 16, **caractérisé par** l'autre étape de durcissement au moins partiel de la matrice thermodurcissable (15).

18. Procédé de fabrication d'un produit composite à base de fibres, comprenant un procédé selon l'une des revendications 1 à 17 et les autres étapes
d'encastrement du demi-produit à base de fibres (2) dans ladite matrice thermodurcissable (15), et
de durcissement de la matrice thermodurcissable (15).

19. Demi-produit à base de fibres pour l'encastrement dans une matrice thermodurcissable, comprenant
une première couche (5) constituée de fibres (22) parallèles, exemptes de matrice, déposées dans une direction (R), et
une deuxième couche (13), reposant sur la première couche (5) en fixant celle-ci, de fibres (23) adhésivées avec au moins une composante de la matrice thermodurcissable (15) dans des faisceaux (14) espacés les uns des autres,
où les faisceaux de fibres (14) de la deuxième couche (13) se présentent en faisant à la fois des angles obtus et aigus (α, β) par rapport à la direction (R) mentionnée, **caractérisé en ce**
**que** les faisceaux de fibres (14) de la deuxième couche (3) sont formés à partir d'au moins un écheveau continu (11) de fibres sans fin (23).

20. Demi-produit à base de fibres selon la revendication 19, **caractérisé en ce que** les faisceaux de fibres (14) de la deuxième couche (13) présentent de manière alternée des angles obtus et aigus (α, β) par rapport à la direction (R) mentionnée dans des domaines (A à D) se succédant, vu dans la direction (R) mentionnée.

21. Demi-produit à base de fibres selon la revendication 19 ou 20, **caractérisé en ce que** les faisceaux de fibres (14) de la deuxième couche (13) sont déposés sous une forme de zigzags ou d'ondulations.

22. Demi-produit à base de fibres selon l'une des revendications 19 à 21, **caractérisé en ce que** quelques faisceaux de fibres (14) de la deuxième couche (13) se croisent les uns les autres.

23. Demi-produit à base de fibres selon l'une des revendications 19 à 22, **caractérisé en ce que** la deuxième couche (13) présente également des faisceaux de fibres (33) exempts de matrice à côté de faisceaux adhésivés par la matrice.

24. Demi-produit à base de fibres selon l'une des revendications 19 à 23, **caractérisé en ce que** la deuxième couche (13) est construite à base de deux strates de faisceaux de fibres (14) dans lesquelles sont déposés des faisceaux de fibres (14) dans ledit angle obtus (α) dans l'une et dans ledit angle aigu (β) dans l'autre.

25. Demi-produit à base de fibres selon l'une des revendications 19 à 24, **caractérisé en ce que** les faisceaux de fibres (14) de la deuxième couche (13) font saillie latéralement par rapport à la première couche (5).

26. Demi-produit à base de fibres selon l'une des revendications 19 à 25, **caractérisé en ce qu'**au moins une autre première et/ou une autre deuxième couche (5', 5", 13', 13") reposent sur ladite deuxième couche (13).

27. Demi-produit à base de fibres selon l'une des revendications 19 à 26, **caractérisé en ce que** les fibres (22) de la première couche (5) sont des fibres de basalte.

28. Demi-produit à base de fibres selon l'une des revendications 19 à 27, **caractérisé en ce que** les première et deuxième couches (5, 13) sont réalisées avec des faisceaux (4, 14) de fibres (22, 23) à base du même matériau.

29. Demi-produit à base de fibres selon l'une des revendications 19 à 28, **caractérisé en ce que** la matrice thermodurcissable (15) est de la résine époxyde.

30. Demi-produit à base de fibres selon l'une des revendications 19 à 29, **caractérisé en ce qu'**il est muni d'un film (3, 19) sur au moins l'une de ses surfaces.

31. Demi-produit à base de fibres selon l'une des revendications 19 à 30, **caractérisé en ce que** toutes les couches (5, 5', 5", 13, 13', 13") sont comprimées ensemble.

32. Demi-produit à base de fibres selon l'une des revendications 19 à 31, **caractérisé en ce que** la matrice thermodurcissable (15) est au moins partiellement durcie.
